Europäisches Patentamt

European Patent Office

Office européen des brevets

(11) Publication number : **0 478 259 A2**

# EUROPEAN PATENT APPLICATION

(21) Application number : 91308644.3

(22) Date of filing : 23.09.91

(51) Int. Cl.⁵ : **B29D 30/46**

(30) Priority : 27.09.90 JP 258295/90

(43) Date of publication of application :
01.04.92 Bulletin 92/14

(84) Designated Contracting States :
DE ES FR GB IT

(71) Applicant : **Bridgestone Corporation**
**10-1, Kyobashi 1-Chome Chuo-Ku**
**Tokyo 104 (JP)**

(72) Inventor : **Nakamura, Tatsuo**
**5-5, Ogawahigashi-Cho 3-Chome**
**Kodaira City, Tokyo (JP)**
Inventor : **Kiyama, Naohisa**
**5-5, Ogawahigashi-Cho 3-Chome**
**Kodaira City, Tokyo (JP)**

(74) Representative : **Whalley, Kevin et al**
**MARKS & CLERK 57/60 Lincoln's Inn Fields**
**London WC2A 3LS (GB)**

(54) **Belt-shaped member sheet cutting and attaching method.**

(57)    A belt-shaped member sheet cutting and attaching method includes steps of paying a belt-shaped member (14) having a constant width such as an inner liner for constituting a tire out of a supply roll (15) by a predetermined length (X), cutting the paid belt-shaped member at a predetermined angle (N) to the width direction of the member to form a parallelogrammic sheet (S), transferring the parallelogrammic sheet in the direction of cut edges (45) of the sheet, and attaching the sheet (S) around the circumference of a drum (41) and joining the forward and rearward ends (47, 48) of the sheet with each other. According to this method, the joined portion of the sheet is distributed widely in the circumferential direction of the drum so that the uniformty of a tire to be produced is improved. Moreover, even if the kind of tire is to be changed, the belt-shaped member can be used only by changing feeding lengths and cutting angles of the belt-shaped member without replacing the belt-shaped member with another one having a different width. Therefore, the operational efficiency for producing tires is also improved.

EP 0 478 259 A2

# FIG_1

This invention relates to a method of cutting a sheet from a belt-shaped member and attaching it around a drum.

There has been a known method of cutting a sheet of a belt-shaped member and attaching it around a drum for forming an inner liner constituting a pneumatic tire. In such a known method, a belt-shaped member having a constant width is paid out of a supply roll by a predetermined length and cut along its width direction to form a rectangular sheet. Thereafter, the sheet is transferred in a direction perpendicular to the cut edges of the sheet and then attached to the circumference of a rotating drum. At the same time, forward and rearward cut edges of the sheet are joined with each other such that they are overlapping.

In this cutting and attaching method of the belt-shaped member, the forward and rearward cut edges of the sheet are parallel to the rotating axis of the drum. Therefore, the overlapping portion of the sheet at the joined portion has a thickness twice that of the sheet and extends along a line in parallel with the rotating axis of the drum so that the overlapping portion exists only at one location on the circumference of the drum. Consequently, the overlapping portion detrimentally affects the uniformity of a tire to be produced. Moreover, if kinds of tires to be produced are changed in production, it is required to exchange belt-shaped members different in width in consideration of the tires to be produced. The exchanging operation of belt-shaped members is very troublesome and must be effected every time when kinds of tires to be produced are changed. Therefore, the process for producing tires becomes complicated and the operation efficiency imperatively lowers.

It is an object of the invention to provide a belt-shaped member cutting and attaching method which is able to distribute the overlapping portion at the joined portion of a sheet widely in a circumferential direction of a drum and need not exchange supply rolls of belt-shaped members even if widths of sheets to be attached to the drum are changed.

In order to accomplish this object, the method of cutting a belt-shaped member sheet and attaching it to a drum according to the invention comprises steps of paying the belt-shaped member having a constant width out of a supply roll by a predetermined length, cutting the paid belt-shaped member at a predetermined angle to the width direction of the member to form a parallelogrammic sheet, transferring the parallelogrammic sheet in the direction of cut edges of the sheet, and attaching the sheet around the circumference of the drum being rotated and joining the forward and rearward inclined ends which are not cut edges of the sheet with each other.

In carrying out the method according to the invention, a belt-shaped member having a constant width is paid by a predetermined length out of a supply roll and then cut along lines inclined at a predetermined angle to the width direction of the member. As a result, a parallelogrammic sheet having a predetermined length is obtained from the belt-shaped member. The parallelogrammic sheet is then transferred in the direction in parallel with the cut edges of the sheet and the forward inclined end which is one side edge before cutting of the belt-shaped member and not cut edge of the sheet is attached to a drum. Thereafter, the sheet is fed to the drum, while the drum is being rotated, so that the forward inclined end of the sheet is progressively attached to the drum. Finally, the rearward inclined end which is the opposite side edge before cutting of the belt-shaped member and not cut edge of the sheet is overlapped on and joined with the forward inclined end. As the sheet is parallelogrammic, the joined forward and rearward inclined ends of the sheet extend at a predetermined angle to the direction (the width direction of the sheet) perpendicular to the transferred direction of the sheet.

As a result, the overlapping portion at the joined ends of the sheet is inclined to the rotating axis of the drum. Therefore, the overlapping portion is distributed widely over a predetermined angle in the circumferential direction of the drum so that the uniformity of a tire to be produced is improved. Moreover, even if kinds of tires are changed, the belt-shaped member having the constant width which has been used for producing one kind of the tire can be used only by changing feeding lengths and cutting angles of the belt-shaped member without replacing the supply roll of the belt-shaped member with another one. Therefore, roll exchanging operation is not needed so that the operating efficiency for producing tires is also improved.

The invention will be more fully understood by referring to the following detailed specification and claims taken in connection with the appended drawings.

Fig. 1 is a plan view illustrating an apparatus for carrying out the first embodiment of the method according to the invention;

Fig. 2 is a sectional view illustrating a belt-shaped member taken along the line II-II in Fig. 1;

Fig. 3 is a partial sectional view of the apparatus taken along the line III-III in Fig. 1;

Fig. 4 is a side view illustrating the transfer conveyor of the apparatus viewed in the direction of arrows IV in Fig. 1;

Fig. 5 is a sectional view illustrating the joined portion of the belt-shaped member;

Fig. 6 is a sectional view similar to Fig. 2 illustrating the second embodiment of the invention;

Fig. 7 is a sectional view illustrating the joined portion of the sheet shown in Fig. 6;

Fig. 8 is a sectional view similar to Fig. 2 illustrating the third embodiment of the invention;

Fig. 9 is a sectional view illustrating the joined portion of the sheet shown in Fig. 8;

Fig. 10 is a sectional view similar to Fig. 2 illustrating the fourth embodiment of the invention; and

Fig. 11 is is a sectional view illustrating the joined portion of the sheet shown in Fig. 10.

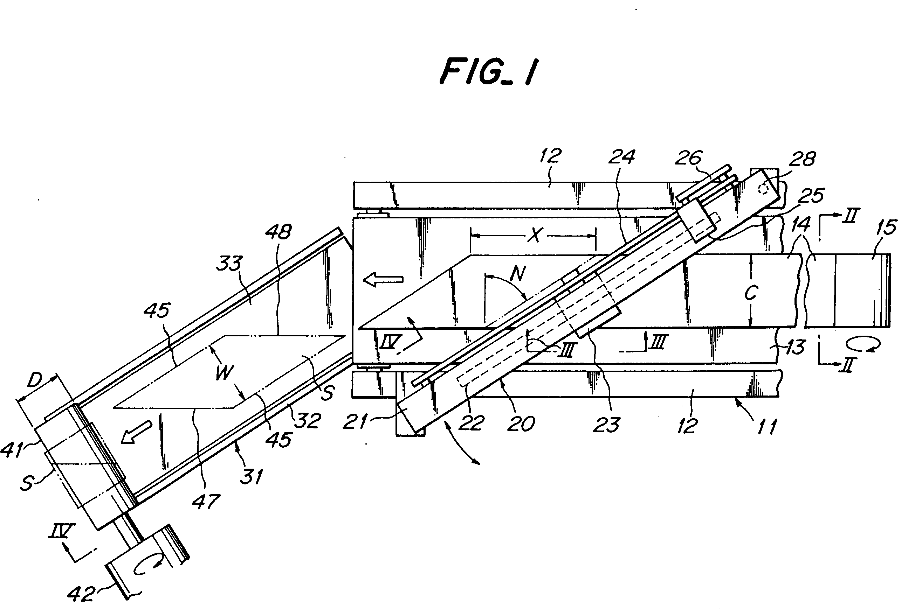

Referring to Fig. 1, a cutting conveyor 11 includes a frame 12, and a conveyor belt 13 supported by the frame 12 and adapted to transfer a belt-shaped member 14 arranged thereon forward (in the direction shown by an arrow). The belt-shaped member such as an inner liner or the like has been wound upon itself to form a supply roll 15 positioned rearward of the cutting conveyor 11. The belt-shaped member 14 has a width constant throughout the length of the member 14 and is adapted to be paid by a predetermined length X out of the roll 15 and fed onto the cutting conveyor 11 every time when the roll 15 is intermittently rotated by a predetermined angle.

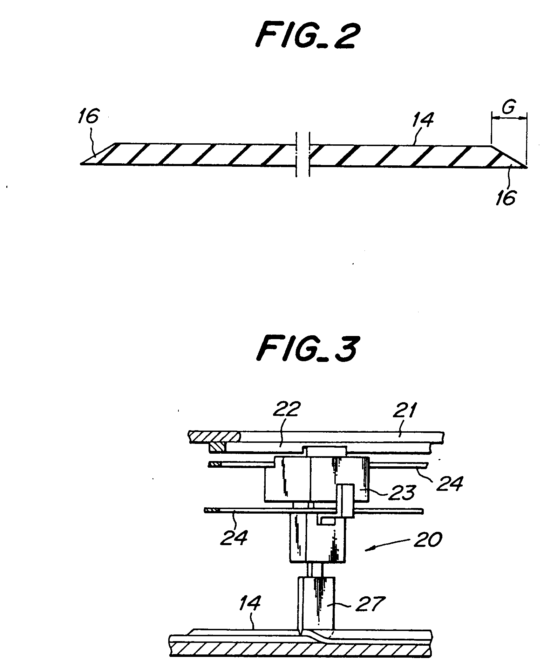

The belt-shaped member 14 is formed on both side edges with thickness-changing portions 16 having a predetermined width G as shown in Fig. 2. The thickness-changing portions 16 are tapered outwardly in width directions of the belt-shaped member 14. Both the thick-changing portions 16 in the shown embodiment have straight inclined upper surfaces on one surface side of the member 14 so as to reduce their thicknesses in the width directions of the belt-shaped member 14. The thick-changing portions 16 are formed in the preceding process.

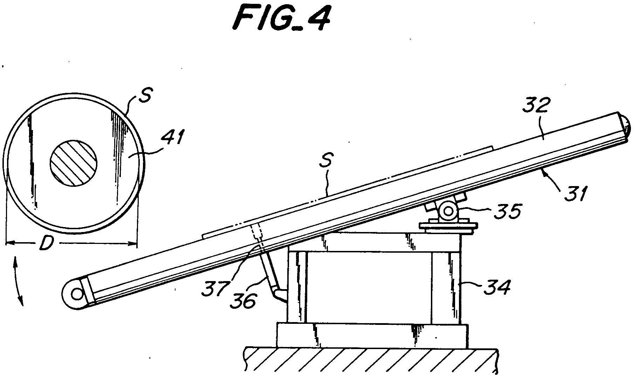

Referring to Figs. 1 and 3, there is provided above the forward end of the cutting conveyor 11 a cutting mechanism 20 having a support frame 21 arranged at a predetermined angle N to the width direction of the conveyor belt 13. Fixed onto the support frame 21 is a guide rail 22 extending in the longitudinal direction of the support frame 21, on which a slide block 23 is slidably supported. A transmission belt 24 extends and runs around a pair of rollers provided on the support frame 21. The slide block 23 is connected to a part of the transmission belt 24.

Mounted onto the support frame 21 is motor 25 whose rotation is transmitted through a belt 26 to the transmission belt 24. Mounted on the underside of the slide block 23 is a cutting blade 27 in the form of a rectangular plate which extends in vertical directions and heated by a heater (not shown). As a result, when the motor 25 is energized, the slide block 23 and the cutting blade 27 move in directions at the predetermined angle N to the width direction of the conveyor belt 13 along the guide rail 22 guiding the slide block 23. Consequently, the belt-shaped member 14 on the conveyor belt 13 is cut along a straight line inclined at the predetermined angle N to the width direction of the conveyor belt 13 to form a parallelogrammic sheet S.

One end of the support frame 21 is pivotally connected to the frame 12 by a rotating shaft 28, while the other end of the support frame 21 is adapted to slidably move on the frame 12. If it is required to vary the cutting angle N, the support frame 21 is rotated about the rotating shaft 28 through a required angle by means of a rotating mechanism (not shown) and is then fixed in the rotated position.

Referring to Figs. 1 and 4, there is provided a transfer conveyor 31 positioned forward of the cutting conveyor 11 and extending in parallel with the support frame 21 such that the rearward end of the transfer conveyor 31 is located immediately below the forward end of the cutting conveyor 11. The transfer conveyor 31 includes a rocking frame 32, and a conveyor belt 33 supported on the rocking frame 32 in a manner movable around pulleys provided therein. Arranged immediately below the transfer conveyor 31 is a support base 34 on which the transfer conveyor 31 is rockably supported by means of bearings 35. Reference numeral 36 denotes a cylinder 36 having a cylinder head connected to the support base 34 and a piston rod 37 whose rod end is connected to the transfer conveyor 31 at a position forward of the bearings 35.

A cylindrical drum 41 expansible and contractible in diameter is provided immediately above the forward end of the transfer conveyor 31 and is intermittently rotated about its axis by means of driving means 42. When the piston rod 37 is extended from the cylinder 36, the forward end of the transfer conveyor 31 moves toward the undersurface of the drum 41 so that the sheet S transferred by the transfer conveyor 31 is urged against the drum 41 and attached thereto. Control means such as a computer (not shown) controls the operations of the cutting conveyor 11, the cutting mechanism 20, the transfer conveyor 31, the cylinder 36 and drum 41.

The operation of the apparatus for carrying out the first embodiment according to the invention will be explained hereinafter.

It is assumed that a sheet S having a width of W is attached to a drum 41 having a diameter D with a lap B of the sheet S wound around the drum 41 being equal to the width G of the thickness-changing portions 16. In this case, the width C of the belt-shaped member 14 is expressed by ($\pi$D cos N + B), and the width W of the sheet S is indicated by X cos N. Therefore, a cutting angle N and a feeding length X of the belt-shaped member 14 are obtained by previously inputting the previously known values of the diameter D of the drum 41, the width C of the belt-shaped member 14, the width W of the sheet S and the lap B (G) into the control means.

The rotating mechanism (not shown) is then actuated by a signal sent from the control means so that the cutting mechanism 20 is rotated about the rotating shaft 28 until the inclined angle of the cutting mechanism 20 to the width direction of the conveyor belt 13 becomes the angle N, and the cutting mechanism 20 is then fixed thereat. In this state, when the motor 25 on the cutting mechanism 20 is energized, the slide block 23 and the cutting blade 27 are moved along the guide rail 22. As a result, the belt-shaped member 14 on the conveyor belt 13 is cut along a straight line inclined at the predetermined angle N to the width direction of the member 14 by means of the cutting blade 27 so that the preceding end of the belt-shaped member 14 is trimmed at the cutting angle N.

Thereafter, the cutting conveyor 11 is actuated so as to move its upper run forward to feed the belt-shaped member 14 paid out of the roll 15 in the direction shown by the arrow. The fed distance of the belt-shaped member 14 is equal to the feeding length X obtained by the operation in the control means. Then the cutting mechanism 20 is again actuated to cut the belt-shaped member 14 at the cutting angle N. As a result, a parallelogrammic sheet S having a length X is obtained from the belt-shaped member 14.

The cutting conveyor 11 is then advanced the feeding length X for the next cutting, while the cut sheet S is transferred onto the transfer conveyor 31 by means of vacuum cups (not shown). In this case, as the transfer conveyor 31 extends in parallel with the support frame 21 or in the extending direction of the cut edges 45 of the sheet S, the sheet S on the transfer conveyor 31 is transferred in the extending direction of the cut edges 45 of the sheet S by the actuation of the transfer conveyor 31. At this time, the cut edges 45 of the sheet S are in a plane perpendicular to the rotating axis of the drum 41.

The sheet S is transferred toward the drum 41 in this manner, and the operation of the transfer conveyor 31 is once stopped when the forward end 47 (one of the side edges of the belt-shaped member 14) of the sheet S has arrived at the position immediately below the drum 41. The cylinder 36 is then actuated so as to extend the piston rod 37 to cause the transfer conveyor 31 to swing about the bearings 35 so that the forward end of the transfer conveyor 31 is raised upwardly. As a result, the sheet S on the transfer conveyor 31 moves toward the undersurface of the drum 41 so that the forward end 47 of the sheet S is urged against the undersurface of the drum 41 and attached thereto. In this state, the transfer conveyor 31 is advanced and the drum 41 is rotated in synchronism with each other so that the sheet S is progressively attached to the circumference of the drum 41.

As a result, the sheet S is attached to the whole circumference of the drum 41. As the sheet S has the lap B, the rearward end 48 (the opposite side edges of the belt-shaped member 14) of the sheet S is overlapped on and joined with the forward end 47. In this case, as the sheet S is parallelogrammic, both the forward and rearward ends 47 and 48 are inclined at the predetermined angle N to the direction (the width direction of the sheet S) perpendicular to the transferring direction. Therefore, the lapping portion 49 of the sheet S provided at the joined portion of the forward and rearward ends 47 and 48 is oblique to the rotating axis of the drum 41.

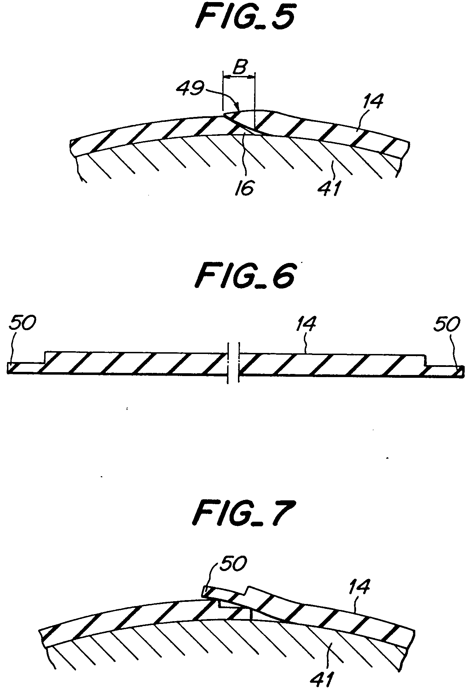

Consequently, the lapping portion 49 is distributed widely over a part of the circumference of the drum 41 so that the uniformity of a tire using the sheet S is improved. Moreover, as the forward and rearward ends 47 and 48 were the thickness-changing portions 16 having progressively reduced thicknesses before being cut, the joined portion does not increase its thickness even if the forward and rearward ends 47 and 48 are overlapped as shown in Fig. 5.

In the event that kinds of tires to be produced are changed, according to the method of the prior art the belt-shaped member 14 has to be replaced with a belt-shaped member having a width to meet that of the new kind of tires. According to the invention, however, all that is required is to change the feeding length X and the cutting angle N of the belt-shaped member having the constant width depending upon the kinds of tires without exchanging the belt-shaped member. As a result, the heavy roll 15 need not be exchanged so that operating efficiency is improved. In this case, positions of the transfer conveyor 31 and drum 41 should of course be changed in connection with the change of the feeding length and the cutting angle.

Fig. 6 illustrates the second embodiment of the invention. In the second embodiment, thickness-changing portions 50 are formed by substantially uniformly thinned side edges of a belt-shaped member 14 to form steps in section, respectively. In this case, the thickness-changing portions 50 are partially overlapped on portions of the member 14 which do not reduce its thickness as shown in Fig. 7.

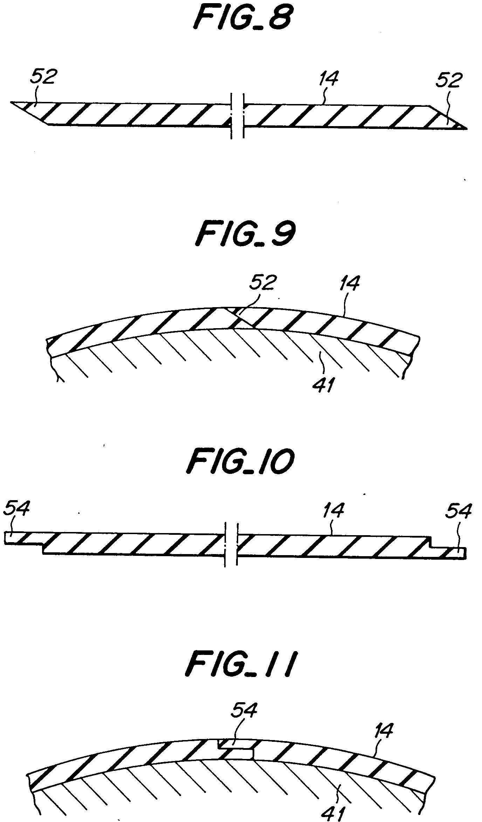

Fig. 8 illustrates the third embodiment of the invention. In the third embodiment, one of the thickness-changing portions 52 is tapered outwardly in one width direction of a belt-shaped member 14 to have a straight inclined surface on one surface of the member 14 to reduce its thickness in the width direction of the member, while the other thickness-changing portion 52 is tapered outwardly in the other width direction of the member 14 to have a straight inclined surface on the other surface of the member 14 to reduce its thickness in the other width direction of the member 14. When these thickness-changing portions 52 are joined overlapping, the thickness-changing portions 52 are fitted with each other in a supplemental relationship to prevent increase in thickness at the jointed portion as shown in Fig. 9.

Fig. 10 illustrates the fourth embodiment of the invention. In this embodiment, one of the thickness-changing portions 54 is formed by a substantially uniformly thinned side edge of a belt-shaped member 14 on the upper side thereof, while the other thickness-changing portion 54 is formed by a uniform thinned side edge on the lower side of the belt-shaped member 14. When these thickness-changing portions 54 are joined overlapping, the thickness-changing portions 52 are fitted with each other in a supplemental relationship to prevent increase in thickness at the jointed portion as shown in Fig. 11.

As can be seen from the above explanation, according to the invention, the overlapping portion at the joined portion of a member attached around a drum is distributed widely over the circumference of the drum so that the uniformity of a produced tire using the member is improved. Moreover, even if widths of sheets to be attached to the drum are changed, exchange of rolls of members of sheets is not needed so that operation efficiency is also improved.

While the invention has been particularly shown and described with reference to preferred embodiments thereof, it will be understood by those skilled in the art that the foregoing and other changes in form and details can be made therein without departing from the spirit and scope of the invention.

**Claims**

1. A method of cutting a sheet from a belt-shaped member and attaching it to a drum, comprising steps of paying a belt-shaped member (14) having a constant width out of a supply roll (15) by a predetermined length (X), cutting the paid belt-shaped member at a predetermined angle (N) to the width direction of the member to form a parallelogrammic sheet (S), transferring the parallelogrammic sheet in the direction of cut edges (45) of the sheet, and attaching the sheet (S) around the circumference of a drum (41) being rotated and joining the forward and rearward ends (47,48) of the sheet with each other.

2. A method as claimed in claim 1, characterized in that said belt-shaped member (14) is previously formed with thickness-changing portions (16, 50, 52, 54) having substantially constant widths (G) along side edges at both width ends of the belt-shaped member.

3. A method as claimed in claim 2, characterized in that said thickness-changing portions (16) are tapered outwardly in width directions of the belt-shaped member (14) to have straight inclined surfaces on one surface of the member to reduce their thickness in the width directions of the member.

4. A method as claimed in claim 2, characterized in that one of said thickness-changing portions (52) is tapered outwardly in one width direction of the belt-shaped member (14) to have a straight inclined surface on one surface of the member to reduce its thickness in the width direction of the member, arid the other thickness-changing portion (52) is tapered outwardly in the other width direction of the member (14) to have a straight inclined surface on the other surface of the member to reduce its thickness in the other width direction of the member.

5. A method as claimed in claim 2, characterized in that said thickness-changing portions (50) are substantially uniformly thinned side edges of the belt-shaped member (14) and formed on its one surface.

6. A method as claimed in claim 2, characterized in that one of said thickness-changing portions (54) is a substantially uniformly thinned side edge of the belt-shaped member (14) and formed on one surface of the member, and the other thickness-changing portion (54) is a substantially uniformly thinned side edge of the belt-shaped member (14) and formed on the other surface of the member.

FIG_1

EP 0 478 259 A2

# FIG.2

# FIG.3

# FIG_4

*FIG_5*

*FIG_6*

*FIG_7*

## FIG_8

52     14     52

## FIG_9

52   14   41

## FIG_10

54    14    54

## FIG_11

54   14   41